Europäisches Patentamt

European Patent Office

Office européen des brevets

(11) Publication number: **0 457 274 A2**

# EUROPEAN PATENT APPLICATION

(21) Application number: 91107793.1

(22) Date of filing: 14.05.91

(51) Int. Cl.⁵: **B29C 49/24**, B29C 49/20, B29C 67/18

(30) Priority: 15.05.90 IT 2030590

(43) Date of publication of application:
21.11.91 Bulletin 91/47

(84) Designated Contracting States:
AT BE CH DE DK ES FR GB LI NL SE

(71) Applicant: CENTRO SVILUPPO SETTORI
IMPIEGO S.r.l.
31, Foro Buonaparte
I-20121 Milan(IT)

(72) Inventor: Addeo, Antonio
35, Via Scala
I-80030 S. Paolo Belsito, Napoli(IT)
Inventor: Mascia, Francesco
1, Via Cavour
I-22070 Guanzate, Como(IT)
Inventor: Pinetti, Lucio
7, Via de Predis
I-20155 Milan(IT)

(74) Representative: Barz, Peter, Dr. et al
Patentanwälte Dipl.-Ing. G. Dannenberg Dr.
P. Weinhold, Dr. D. Gudel Dipl.-Ing. S.
Schubert, Dr. P. Barz Siegfriedstrasse 8
W-8000 München 40(DE)

(54) **Process for preparing shaped articles having an ennobled outer surface and articles obtained thereby.**

(57) Described is a process for preparing shaped bodies, optionally structural and/or thermoinsulating, having an ennobled outer surface, said process comprising the steps of:
a) extruding a tube of thermoplastic polymer;
b) placing the extruded tube into a blow-molding mold composed of two half-molds;
c) inserting an ennobling film compatible with the thermoplastic polymer between the extruded tube and at least one of said two half-molds; and
d) molding the tube.

F i g. 2

The present invention relates to a process for preparing shaped bodies (articles), optionally structural and/or thermoinsulating, having an ennobled outer surface and to the articles obtained thereby.

The term "shaped body", whenever used in the present specification and in the appended claims, denotes any structural, rigid, circular or polygonal element to be utilized in the fields of transportation, househould electric appliances, building industry, motor industry, telecommunications, office machines, etc., such as doors, covers, casings (in particular for refrigerators and freezers), panels, containers (for example portable thermal bags) and the like.

At present, the articles of the above-indicated type are generally obtained by starting from two half-shells, which are mechanically assembled by means of welding or glueing, the hollow space defined by said two half-shells being optionally filled with foamed polyurethane.

Another technique, described in IT-A-21815 A/87, comprises forming, by blow-molding, a hollow wrapper from a thermoplastic polymer, and then filling the wrapper with a polyurethane mixture capable of being foamed.

In both of the above cases the final article exhibits an outer surface which may require particular treatments for improving its resistance to ageing, and, in particular, to scratching, dirt, etc.

There has now been found a process which permits to prepare, by blow-molding, molded articles having an ennobled outer surface already after the molding step without requiring, therefore, further subsequent improving treatments.

Thus, the present invention provides a process for preparing shaped bodies, optionally structural and/or thermoinsulating, having an ennobled outer surface, comprising the steps of:

a) extruding a tube made of thermoplastic polymer;

b) placing the extruded tube into a blow-molding mold composed of two half-molds;

c) inserting an ennobling film consistent (compatible) with the thermoplastic polymer between the extruded tube and at least one of said two half-molds; and

d) molding the tube.

Any thermoplastic polymer can be used to prepare the extruded tube. Illustrative examples thereof include polystyrene, impact-resistant polystyrene, polystyrene modified with polar monomers such as acrylonitrile, styrene mixes such as ABS, SAN, etc., polyvinylchloride, high, medium and low density polyethylenes, polypropylene, ethylene/propylene copolymers, acrylic and/or methacrylic resins such as polymethacrylates, polyester resins such as polyethylene terephthalate (PET) and polybutylene terephthalate (PBT), etc.

Preferred polymer materials are polystyrene, impact resistant polystyrene and styrene mixes.

The extruded tube, which has a preferably circular cross-section, has a thickness which depends on the shape and dimension of the shaped body to be produced, but generally the thickness ranges from 2 to 20 mm. To promote the adhesion to the ennobling film and the thermomolding of the tube, the tube is generally maintained at a higher temperature than the softening temperature of the corresponding polymer.

The ennobling film, which usually is at room temperature or at a slightly higher temperature, generally has a thickness of from 10 to 1,000 $\mu$m preferably 100 to 500 $\mu$m and may be prepared from a polymer compatible with that of the tube. It also is possible to use films prepared from polymers which are not compatible with the polymer of the tube, but have been made to be compatible by means of suitable compatibilization techniques, for example chemical etching, flaming, corona treatment, application of primers, and the like.

Preferred ennobling films for the process of the invention are films essentially made of polyester (e.g. PET) which are sold under the tradename MYLAR[(R)] by Du Pont, or films essentially based on polymethylmethacrylate sold under the tradename KYNAR[(R)] by Penwalt.

According to a preferred embodiment of the process of the present invention shaped bodies having structural and/or thermoinsulating properties are produced. For this purpose it is possible to utilize structural and/or insulating cores or preforms placed inside the tube prior to the tube molding.

The structural and/or thermoinsulating core is preferably made of a foamed polymeric material. Any foamed polymer can be utilized as component of the premolded core used in the process of the present invention, although foamed polystyrene and foamed impact-resistant polystyrene are preferred.

The premolded core, the shape of which reproduces the shaped body to be produced, can be obtained by means of conventional techniques, for example sintering of foamed or semifoamed beads with water vapour at 100 to 200° C.

Thermoinsulating cores prepared from foamed polymers having a honeycomb structure, as described in the technical bulletin CIBA-GEIGY PLASTIC and marketed under the trademark HEXCEL[(R)], can be utilized as well.

The tube, containing the premolded core, if any, and the ennobling film are introduced into the mold which reproduces in negative the shape of the article to be obtained or the shape of the preform, if any.

When a preform is employed, the tube molding can be carried out according to various techniques.

One of the preferred techniques comprises two steps: in the first step, a wrapper is obtained by blow-molding the ennobling film and the tube against the walls of the two half-molds, while in the second step the resulting wrapper is applied to the preform by closing and pressing the two half-molds against said preform.

Another technique comprises only the step of closing the mold in order to compress and adapt the ennobling film and the tube against the preform. This step can be accompanied by simultaneous suction of air in order to promote the fitting of the ennobling film and of the thermoplastic polymer to the shape of the preform.

Since in both of the above techniques the tube is at a higher temperature than the softening temperature of the utilized polymer, on closing the mold said tube perfectly adheres both to te ennobling film and to the preform, thus forming an integral structural body therewith.

If no preform is used, the molding of the tube and the ennobling film may be carried out according to techniques well known to those skilled in the art. In this case, the structural and/or thermoinsulating shaped bodies are preparable, e.g., according to the teachings of IT-A-21815 A/87.

A practical embodiment, to be considered as mere example and not as limitation, of the process according to the present invention, is illustrated in the annexed drawing, in which:

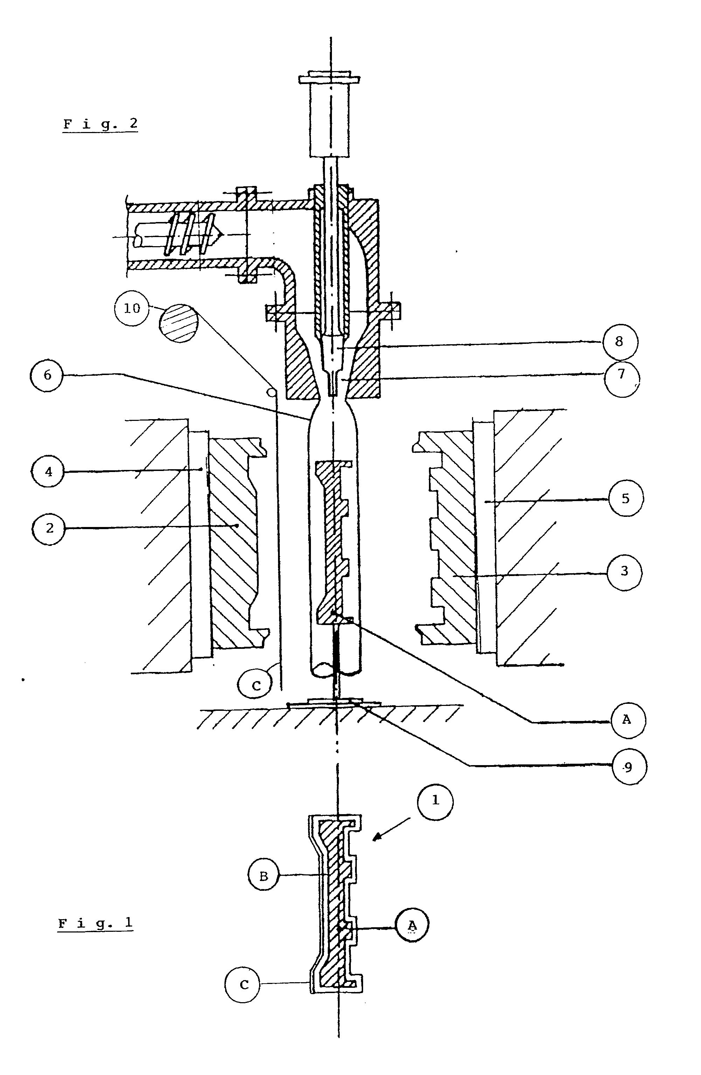

- Fig. 1 shows a section of a top part of a washing machine /dish washing machine prepared according to the process of the invention; and
- Fig. 2 shows the ennobling film and the thermoplastic tube, which wraps a preshaped core, inserted in a blow-molding mold.

With reference to the figures, the top part (TOP) of the washing machine / dish washing machine (1) comprises an inner core (A) of thermoinsulating material, for example foamed impact-resistant polystyrene, an outer wrapper (B), made of compact impact-resistant polystyrene, perfectly adhering and bound to the inner core in such a manner as to form a single structural body and, lastly, an ennobling film (C) welded onto the exposed side.

The apparatus for carrying out the process of the present invention comprises a mold consisting of two halves (2) and (3) mounted on mold holders (4) and (5), respectively. The thermoplastic polymer tube (6) is extruded through an annular opening (7) equipped with an axial duct (8) suited for forming the tube by letting in pressurized air. The tube wraps preform (A), obtained according to conventional techniques, which reproduces shape and dimensions of the TOP to be produced and is maintained in the correct position by means of support (9).

The ennobling film (C) is unwound from a roller (10) and is positioned between tube (6) and half-mold (2) which reproduces in negative the exposed side of the TOP.

During the molding step, a wrapper is formed by blowing air through duct (8) into the tube and almost simultaneously closing the two halves of the mold against core (A). By closing the mold also the cutting of the ennobling film is effected.

Since the tube is at a higher temperature than the softening temperature of the utilized polymer, when closing the mold the wrapper perfectly adheres both to preform (A), being welded thereon to form an integral structural body, and to ennobling film (C).

## Claims

1. Process for preparing shaped bodies, optionally structural and/or thermoinsulating, having an ennobled outer surface, said process comprising the steps of:
   a) extruding a tube of thermoplastic polymer;
   b) placing the extruded tube into a blow-molding mold composed of two half-molds;
   c) inserting an ennobling film compatible with the thermoplastic polymer between the extruded tube and at least one of said two half-molds; and
   d) molding the tube.

2. Process according to claim 1, wherein the extruded tube is made of polystyrene, impact-resistant polystyrene or styrene mixes.

3. Process according to any one of claims 1 and 2, wherein the extruded tube has a circular cross-section and a thickness of from 2 to 20 mm.

4. Process according to any one of the preceding claims, wherein the ennobling film has a thickness of from 10 to 1,000 $\mu$m.

5. Process according to any one of the preceding claims, wherein the ennobling film consists essentially of a polyester resin.

6. Process according to any one of the preceding claims, wherein a structural and/or thermoinsulating preform is inserted into the tube.

7. Process according to claim 6, wherein the premolded core is made of foamed polystyrene or foamed impact-resistant polystyrene.

8. Shaped bodies, optionally structural and/or thermoinsulating, having an ennobled outer surface and being obtainable by the process according to any one of claims 1 to 7.

F i g . 2

F i g . 1